# EUROPEAN PATENT APPLICATION

(11) **EP 4 734 197 A1**
(43) Date of publication of application: **29.04.2026**
(21) Application number: 23941956.7
(22) Date of filing: 21.06.2023
(51) Int. Cl.: H01M 10/04, H01M 10/615

(54) **BATTERY MODULE TREATMENT METHOD AND SYSTEM, AND COMPUTER DEVICE, MEDIUM AND PROGRAM PRODUCT**

(71) Applicant: Contemporary Amperex Technology Co., Limited, Ningde, Fujian 352100 (CN)
(72) Inventor: DUAN, Minmin, Ningde, Fujian 352100 (CN); BAI, Guoxi, Ningde, Fujian 352100 (CN); QIU, Zhenli, Ningde, Fujian 352100 (CN)
(74) Representative: Ran, Handong
(86) International application number: PCT/CN2023/101884
(87) International publication number: WO 2024/259670

(57) **Abstract**

The present application relates to a battery module treatment method and system, and a computer device, a medium and a program product. The battery module treatment method provided in the embodiments of the present application is characterized by comprising: in response to determining that there is a heated battery module on a conveying line, generating an instruction for grabbing the battery module from the conveying line; determining the type of the battery module; and in response to determining that the type of the battery module is a first type, generating an instruction for placing the battery module into a standing repository for standing, wherein the first type indicates that standing needs to be performed on the battery module after heating.

## Description

### TECHNICAL FIELD

This application relates to the field of battery technology, in particular to a battery module processing method and system, a computer device, a medium, and a computer program product.

### BACKGROUND

With the rapid development of the new energy vehicle industry, new energy vehicles have gradually replaced fuel vehicles and gained increasingly widespread application. Battery production is particularly important for the development of the new energy vehicle industry. In a battery production process, heating and resting battery modules is a critical step for improving the discharge efficiency of battery modules and extending the battery lifespan.

There is still a desire for an improved battery module processing method and system.

### SUMMARY

Embodiments of this application are intended to provide an improved battery module processing method and system.

In a first aspect, an embodiment of this application provides a battery module processing method, characterized in that the method includes: in response to determining that a heated battery module exists on a conveyor line, generating an instruction for grabbing the battery module from the conveyor line; determining a type of the battery module; and in response to determining that the type of the battery module is a first type, generating an instruction for placing the battery module into a resting warehouse for resting, where the first type indicates that the battery module requires resting after heating.

In a second aspect, an embodiment of this application provides a battery module processing system, characterized in that the system includes: a heating mechanism, where the heating mechanism includes a heating warehouse and a first mechanical arm; a resting mechanism, where the resting mechanism includes a resting warehouse and a second mechanical arm; a conveyor line for transporting battery modules; and a controller for executing the foregoing method. The heating warehouse is configured to heat battery modules, the first mechanical arm is configured to grab battery modules from the conveyor line to the heating warehouse or grabbing heated battery modules to the conveyor line based on an instruction from the controller, the resting warehouse is configured to rest or buffer battery modules, and the second mechanical arm is configured to grab heated battery modules from the conveyor line to the resting warehouse or grabbing rested or buffered battery modules to the conveyor line based on an instruction from the controller.

In a third aspect, an embodiment of this application provides a computer device, characterized in that the device includes: a memory for storing a computer-executable instruction; and a processor connected to the memory and configured to implement the foregoing method by executing the computer-executable instruction.

In a fourth aspect, an embodiment of this application provides a non-transient computer-readable storage medium, characterized in that an instruction is stored therein, where when the instruction is executed by a processor, the foregoing method is implemented.

In a fifth aspect, an embodiment of this application provides a computer program product, characterized by including an instruction, where when the instruction is executed by a processor, the foregoing method is implemented.

The technical solutions provided by the embodiments of this disclosure may include the following beneficial technical effects: a battery module that does not require a resting process can be directly put into a downstream production line and no longer occupies a position in the resting warehouse. Additionally, when a fault occurs in the downstream production line, the resting warehouse can be used as a buffering warehouse, allowing a battery module that has completed a heating process to promptly leave a heating region, ensuring that a heating time of the battery module meets process requirements, thereby reducing the failure rate.

It should be understood that the above general description and the detailed description below are merely exemplary and explanatory and cannot limit this disclosure.

### BRIEF DESCRIPTION OF DRAWINGS

To more clearly illustrate the technical solutions of the embodiments of this application, the drawings required for use in the embodiments of this application are briefly introduced below. Obviously, the drawings described below are only some embodiments of this application, and those of ordinary skill in the art can obtain other drawings based on these drawings without creative effort.
FIG. 1 is a schematic diagram of layout of a heating and resting production line according to an embodiment of this application;
FIG. 2 is a structural diagram of a battery module processing system according to an embodiment of this application;
FIG. 3 is a schematic diagram of a resting rack in a resting warehouse of a battery module processing system and a sensor arranged in the resting rack according to an embodiment of this application;
FIG. 4 is a flowchart of a battery module processing method according to an embodiment of this application;
FIG. 5 is a flowchart of a battery module processing method according to another embodiment of this application;
FIG. 6 is a schematic diagram of a display interface of a battery module processing system according to an embodiment of this application; and
FIG. 7 is a connection diagram of a computer device according to an embodiment of this application.

In the drawings, the figures are not drawn to actual scale.

### DESCRIPTION OF EMBODIMENTS

Implementations of this application are further described in detail below with reference to the drawings and embodiments. The detailed descriptions and drawings of the following embodiments are used to exemplarily illustrate the principles of this application but cannot be used to limit the scope of this application, that is, this application is not limited to the described embodiments.

In the descriptions of this application, it should be noted that, unless otherwise specified, "multiple" means two or more; and the terms "upper", "lower", "left", "right", "inner", "outer", and the like indicate orientations or positional relationships only for the convenience of describing this application and simplifying the description, and do not indicate or imply that the referred apparatus or element must have a specific orientation or be constructed or operated in a specific orientation, and therefore cannot be understood as limiting this application. In addition, the terms "first", "second", "third", and the like are used for descriptive purposes only and cannot be understood as indicating or implying relative importance. "Perpendicular" is not strictly perpendicular but within an allowable error range. "Parallel" is not strictly parallel but within an allowable error range.

All the orientation terms appearing in the following descriptions are directions shown in the drawings and do not limit the specific structure of this application. In the descriptions of this application, it should also be noted that, unless otherwise explicitly specified and limited, the terms "mounting", "connection", and "join" should be understood in a broad sense, for example, they may be a fixed connection, a detachable connection, or an integral connection; and they may be a direct connection or an indirect connection through an intermediate medium. For those of ordinary skill in the art, the specific meanings of the above terms in this application can be understood based on specific circumstances.

As described therebefore, the heating and resting process is an important step in battery module production. For example, in a battery module production process, after electrolyte injection and electrolyte sealing, battery modules require heating and resting in the next step. Battery modules subjected to high-temperature resting can be improved in both discharge efficiency and battery lifespan. Specifically, the heating and resting process enables an adhesive-coated side plate of a battery module to be bonded with a cell. Adhesive curing requires a specific time, and after the module is coated with an adhesive, stacked, and assembled, the internal adhesive has not yet formed sufficient bonding strength, so the battery module needs to be rested for a period of time.

In the prior art, after being heated, a battery module is grabbed to a conveyor line by a mechanical arm in a heating warehouse region, and a mechanical arm in a resting warehouse region grabs the heated battery module from the conveyor line and places the heated battery module into a resting warehouse for resting. After resting is completed, the mechanical arm in the resting warehouse region places the rested battery module onto the conveyor line for downstream processing.

However, the inventors of this application have realized that, with the development of battery production processes, some types of battery modules do not require resting after heating and can be directly put into a downstream production line for further processing. Whether a resting process is needed generally depends on the type of the battery modules. In the technical solution of this application, after a battery module is heated, the type of the battery module is determined to decide whether the battery module needs to be placed in the resting warehouse. If the battery module needs to be placed in the resting warehouse, a position in the resting warehouse for placing the battery module is determined based on information from the resting warehouse. If the battery module does not need to be placed in the resting warehouse, the mechanical arm can be driven to place the battery module into the downstream production line.

In the technical solution of this application, since a battery module that does not require resting is directly put into the downstream production line and no longer occupies a resting position in the resting warehouse, there are multiple positions available in the resting warehouse for buffering heated battery modules. When the downstream production line cannot receive battery modules, for example, when a temporary fault occurs in the downstream production line, the heated battery modules can be placed in the resting warehouse for buffering to alleviate pressure on an upstream production line. For example, when a fault occurs in the downstream production line, the downstream production line cannot receive the battery modules. In this case, if there are no available positions in the resting warehouse for storing heated battery modules, the heated battery modules would have to remain on the conveyor line. However, the storage capacity of the conveyor line is very limited, causing some heated battery modules to remain in the heating warehouse for extended heating. A heating time longer than a time required for the process significantly increases the failure rate of the battery modules. In contrast, in the technical solution of this application, even if the downstream production line cannot receive battery modules, heated battery modules can be promptly removed from the heating warehouse by being buffered in the resting warehouse.

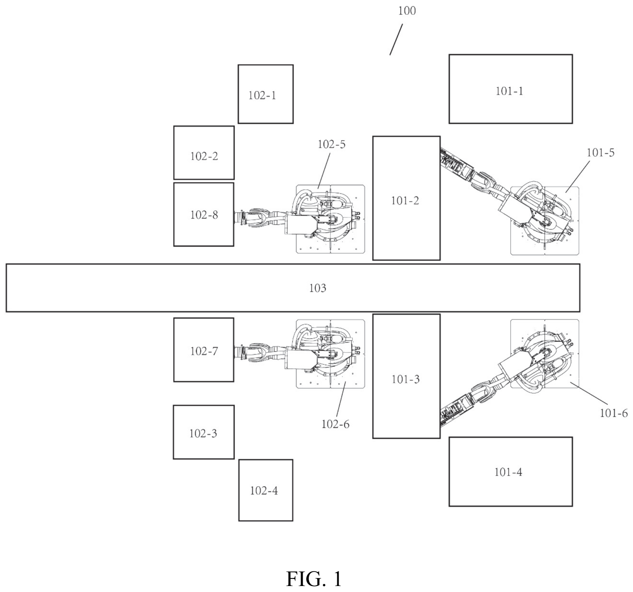

FIG. 1 is a schematic diagram 100 of layout of a heating and resting production line according to an embodiment of this application. In the layout of the heating and resting production line, a conveyor line 103 can transport a battery module from an upstream production line to a position close to a heating warehouse region. The heating warehouse region includes multiple heating warehouses 101-1, 101-2, 101-3, and 101-4. Mechanical arms 101-5 and 101-6 in the heating warehouse region can grab the battery module from the conveyor line 103 to a heating warehouse for heating. After heating is complete, the mechanical arms in the heating warehouse region can grab the battery module from the heating warehouse to the conveyor line for transport to a downstream production line.

A downstream production process of a heating production process may be a resting process. The resting process can be completed in a resting warehouse region. The resting warehouse region may include multiple resting warehouses 102-1, 102-2, 102-3, and 102-4. Mechanical arms 102-5 and 102-6 in the resting warehouse region can grab a heated battery module from the conveyor line 103 to a resting warehouse for resting. In the technical solution of this application, after the mechanical arm in the resting warehouse region grabs the heated battery module from the conveyor line 103, the type of the battery module is determined. Whether the battery module needs to be placed in the resting warehouse for resting is determined based on the type of the battery module. If the type of the battery module indicates that the battery module requires resting, the mechanical arm in the resting warehouse region can grab the heated battery module to the resting warehouse for resting.

If the type of the battery module indicates that the battery module does not require resting, whether the downstream production line in the resting warehouse region can receive the battery module is determined. If it is determined that the downstream production line in the resting warehouse region can receive the battery module, the mechanical arm in the resting warehouse region can grab the battery module to the downstream production line through exit ports 102-7 and 102-8 of the resting warehouse region. If it is determined that the downstream production line in the resting warehouse region cannot receive the battery module, the mechanical arm in the resting warehouse region can grab the heated battery module to the resting warehouse for buffering.

After the battery module has completed resting or buffering, the mechanical arm in the resting warehouse region can grab the battery module from the exit port of the resting warehouse to the conveyor line, to make the battery module enter the downstream production line. Those skilled in the art will understand that this is merely an example, and an arrangement method involving any quantity may be used.

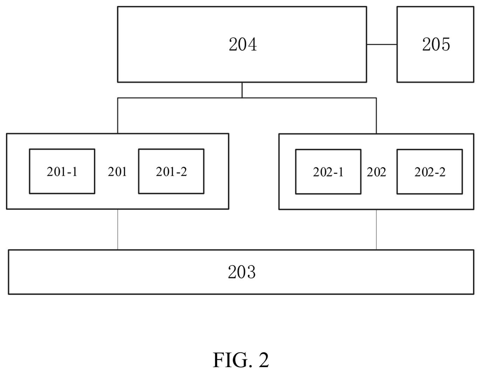

FIG. 2 is a structural diagram of a battery module processing system according to an embodiment of this application. The battery module processing system may include a heating mechanism 201, a resting mechanism 202, a conveyor line 203, and a controller 204. The conveyor line 203 may be configured to transport battery modules. The heating mechanism 201 may include a heating warehouse 201-1 and a first mechanical arm 201-2. Those skilled in the art will understand that the illustrated heating warehouse 201-1 is merely an example, and in the technical solution of this application, the heating mechanism 201 may include multiple heating warehouses. The heating warehouse 201-1 may be configured to heat battery modules. As understood by those skilled in the art, various heating parameters may be set for the heating warehouse to complete a heating process of the battery modules. The first mechanical arm 201-2 may be configured to grab battery modules from the conveyor line 203 to the heating warehouse 201-1 or grabbing heated battery modules to the conveyor line 203 based on an instruction from the controller 204. The resting mechanism 202 may include a resting warehouse 202-1 and a second mechanical arm 202-2. The resting warehouse 202-1 may be configured to rest or buffer battery modules. Those skilled in the art will understand that the illustrated resting warehouse 202-1 is merely an example, and in the technical solution of this application, the resting mechanism 202 may include multiple resting warehouses. The second mechanical arm 202-2 may be configured to grab heated battery modules from the conveyor line 203 to the resting warehouse 202-1 or grabbing rested or buffered battery modules to the conveyor line 203 based on an instruction from the controller 204. As described in detail below, the controller 204 may be configured to execute one or more of the following steps.

In an embodiment of this application, in a resting process, the controller 204 may be configured to execute one or more of the following steps: in response to determining that a heated battery module exists on the conveyor line 203, generating an instruction for grabbing the battery module from the conveyor line 203; determining a type of the battery module; and in response to determining that the type of the battery module is a first type, generating an instruction for placing the battery module into the resting warehouse 202-1 for resting, where the first type indicates that the battery module requires resting after heating. For example, the first type may be a heavy truck module type. Those skilled in the art will understand that the first type may include any type of battery modules that require resting after heating.

In an embodiment of this application, in a heating process, the controller 204 may be configured to execute one or more of the following steps: in response to determining that a battery module in the heating warehouse 201-1 has completed heating, receiving a first message about the battery module, where the first message includes information indicating a position in the heating warehouse 201-1 from which the battery module is to be grabbed; and based on the first message, generating an instruction for grabbing the battery module from the heating warehouse 201-1 to the conveyor line 203. For example, the first message may be position information of the heated battery module in the heating warehouse. Thus, the controller 204 may generate an instruction based on this position information to enable a mechanical arm in a heating region to grab the battery module at the position indicated by the position information in the heating warehouse.

In an embodiment of this application, the controller 204 may determine the type of the battery module by acquiring identification information of the battery module. For example, the controller 204 may acquire the identification information of the battery module from information from an upstream production line. For another example, by using a scanning device to scan an identifier on a tray on the battery module, the controller 204 may receive the identification information of the battery module from the scanning device.

In an embodiment of this application, in the resting process, the controller 204 may be configured to execute one or more of the following steps: in response to determining that the type of the battery module is a second type, determining a current status of the downstream production line; and in response to determining that the current status of the downstream production line indicates that the downstream production line cannot receive the battery module, generating an instruction for placing the battery module into the resting warehouse 202-1 for buffering, where the second type indicates that the battery module does not require resting after heating. The second type may include any type of battery modules that do not require resting after heating. The mechanical arm 202-2 may place the grabbed battery module into the resting warehouse for buffering based on the instruction.

As described therebefore, in a region where the resting process is performed, multiple resting warehouses may be provided, and each resting warehouse may include multiple resting positions. Therefore, in the operation of the mechanical arm placing the battery module into the resting warehouse, the controller may generate an instruction regarding a specific position in the resting warehouse where the mechanical arm should place the battery module. In an embodiment of this application, in the resting process, the controller 204 may be configured to execute one or more of the following steps: receiving a second message from the resting warehouse 202-1, where the second message includes information about a position in the resting warehouse capable of accommodating the battery module; and based on the second message, generating an instruction for instructing the battery module to be placed in a position in the resting warehouse. For example, the second message may be information about a resting position in a resting rack of the resting warehouse. The mechanical arm 202-2 may use this information to reach the resting position capable of accommodating the battery module so as to place the grabbed battery module to the resting position.

In an embodiment of this application, the controller 204 may be configured to execute one or more of the following steps: in response to determining that the current status of the downstream production line indicates that the downstream production line can receive the battery module, generating an instruction for placing the battery module into the downstream production line. The mechanical arm 202-2 may move the grabbed battery module to the conveyor line at the exit port based on the instruction, allowing the battery module to enter the downstream production line.

As shown in FIG. 2, in an embodiment of this application, the battery module processing system may further include a display 205 for displaying a human-machine interaction interface. The controller 204 may be configured to execute one or more of the following steps: acquiring, through the human-machine interaction interface, a first input for indicating a resting or buffering time of the battery module in the resting warehouse; and setting the resting or buffering time of the battery module in the resting warehouse based on the first input. For a battery module that requires resting, the controller 204 may determine a remaining resting time of the battery module based on the set resting time and a storage time of the battery module in the resting warehouse. For a battery module that requires buffering, the controller 204 may determine a remaining buffering time of the battery module based on the set buffering time and a storage time of the battery module in the resting warehouse.

In an embodiment of this application, the controller 204 may be configured to execute one or more of the following steps: based on the determined remaining resting time or the determined remaining buffering time of the battery module, generating an instruction for displaying a first interface, where the first interface includes multiple regions, and the multiple regions respectively correspond to multiple positions in the resting warehouse, for displaying the remaining resting time or remaining buffering time of the battery modules in these positions. The human-machine interaction interface is described in detail below.

After the battery module has completed resting and buffering in the resting warehouse, the controller may generate an instruction to drive the mechanical arm to grab the battery module from the resting position in the resting warehouse to the conveyor line, making the battery module enter the downstream production line through the exit port. In an embodiment of this application, the controller 204 may be configured to execute one or more of the following steps: in response to determining that the battery module has completed resting or buffering, determining a current status of the downstream production line; and in response to determining that the current status of the downstream production line indicates that the downstream production line can receive the battery module, receiving a third message about the battery module, where the third message includes information indicating a position in the resting warehouse from which the battery module is to be grabbed; and based on the third message, generating an instruction for grabbing the battery module from the resting warehouse to the conveyor line. For example, the third message may be position information of the battery module that has completed resting or buffering in the resting warehouse. Thus, the controller 204 may generate an instruction based on this position information to enable the mechanical arm in the resting warehouse region to grab the battery module at the position indicated by the position information in the resting warehouse.

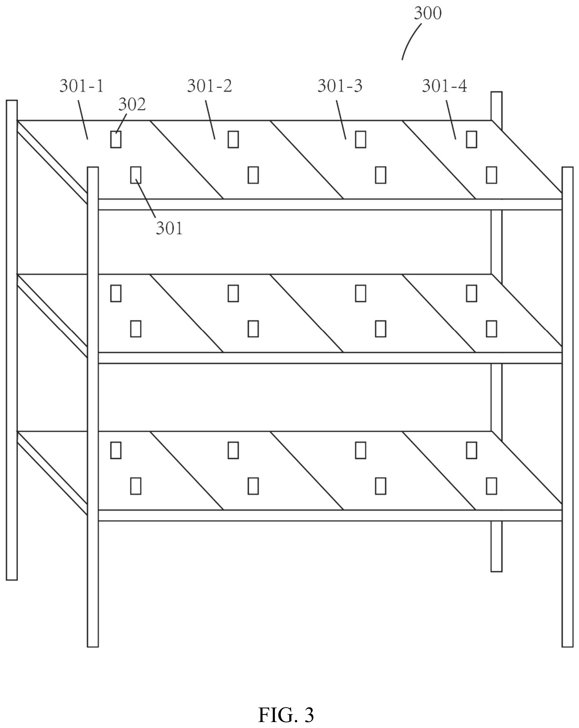

FIG. 3 is a schematic diagram of a resting rack 300 in a resting warehouse of a battery module processing system and a sensor arranged in the resting rack according to an embodiment of this application. As shown in FIG. 3, in an embodiment of this application, the resting warehouse includes multiple resting racks, where each resting rack includes multiple positions capable of resting or buffering battery modules, such as 301-1, 301-2, 301-3, and 301-4.

In an embodiment of this application, each of the multiple positions capable of resting or buffering battery modules is provided with a first sensor 301 for sensing whether a battery module is placed or a second sensor 302 for sensing whether the battery module is aligned. For example, the first sensor may be, but is not limited to, a module in-position sensor. When the first sensor detects that a battery module is placed in the resting position, the controller may receive, from the first sensor, information indicating that the position of the battery module is occupied. When the first sensor detects that no battery module is placed in the resting position, the controller may receive, from the first sensor, information indicating that the position of the battery module is not occupied, and thus the controller may generate an instruction for placing a battery module in that position. For example, the second sensor may be, but is not limited to, a module misalignment-resistant through-beam sensor. For example, through the module misalignment-resistant through-beam sensor, whether the placed battery modules are aligned can be determined to prevent the misaligned battery modules from occupying multiple resting positions or to prevent collision between the misaligned battery modules, so as not to increase the likelihood of faults of the battery modules.

The technical solution of this application has been described above with reference to the battery module processing system. Those skilled in the art will understand that without being limited by the above-described implementations, the battery module processing system described above may have different implementations. The technical solution of this application is described below with reference to the battery module processing method.

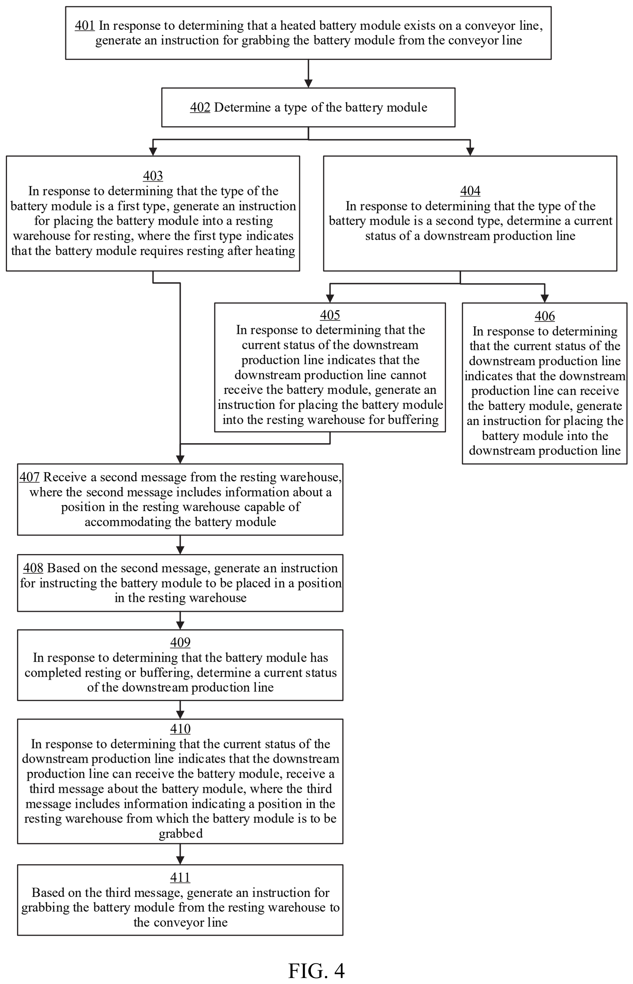

FIG. 4 is a flowchart of a battery module processing method according to an embodiment of this application. The method may be executed by the controller shown in FIG. 2 to complete the processing for battery modules.

In 401, in response to determining that a heated battery module exists on the conveyor line, an instruction for grabbing a battery module from a conveyor line is generated. In 402, a type of the battery module is determined. In 403, in response to determining that the type of the battery module is a first type, an instruction for placing the battery module into a resting warehouse for resting is generated, where the first type indicates that the battery module requires resting after heating. In 404, in response to determining that the type of the battery module is a second type, a current status of a downstream production line is determined. In 405, in response to determining that the current status of the downstream production line indicates that the downstream production line cannot receive the battery module, an instruction for placing the battery module into the resting warehouse for buffering is generated, where the second type indicates that the battery module does not require resting after heating. In 406, in response to determining that the current status of the downstream production line indicates that the downstream production line can receive the battery module, an instruction for placing the battery module into the downstream production line is generated. In 407, a second message from the resting warehouse is received, where the second message includes information about a position in the resting warehouse capable of accommodating the battery module. In 408, based on the second message, an instruction for instructing the battery module to be placed in a position in the resting warehouse is generated. In 409, in response to determining that the battery module has completed resting or buffering, a current status of the downstream production line is determined. In 410, in response to determining that the current status of the downstream production line indicates that the downstream production line can receive the battery module, a third message about the battery module is received, where the third message includes information indicating a position in the resting warehouse from which the battery module is to be grabbed. In 411, based on the third message, an instruction for grabbing the battery module from the resting warehouse to the conveyor line is generated.

In an embodiment of this application, Step 402 may be implemented by acquiring identification information of the battery module and determining the type of the battery module based on the identification information. For example, the identification information of the battery module may be acquired based on information from the upstream production line. For another example, the identification information of the battery module may be received from a scanning device by using the scanning device to scan an identifier on a tray of the battery module.

In an embodiment of this application, the battery module processing method may further include receiving first sensing data from a first sensor in the resting warehouse to determine whether a battery module is located in a resting position, and receiving second sensing data from a second sensor in the resting warehouse to determine whether the battery module in the resting position is aligned.

By executing the method described in FIG. 4, a battery module that does not require a resting process can be directly put into the downstream production line and no longer occupies a position in the resting warehouse. Additionally, when a fault occurs in the downstream production line, the resting warehouse can be used as a buffering warehouse, allowing a battery module that has completed the heating process to promptly leave the heating region, ensuring that a heating time of the battery module meets process requirements, thereby reducing the failure rate.

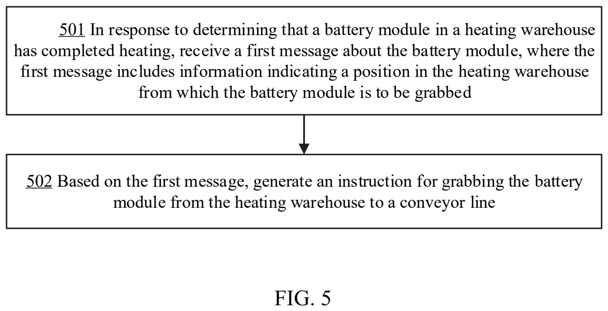

FIG. 5 is a flowchart of a battery module processing method according to another embodiment of this application. In 501, in response to determining that a battery module in the heating warehouse has completed heating, a first message about the battery module is received, where the first message includes information indicating a position in the heating warehouse from which the battery module is to be grabbed. In 502, based on the first message, an instruction for grabbing the battery module from the heating warehouse to the conveyor line is generated. In the method shown in FIG. 5, a process in which the controller drives the mechanical arm to grab a heated battery module to the conveyor line after the battery module has completed heating is described. Since the heating warehouse may include multiple heating positions, the controller needs to generate an instruction based on position information of the heated battery module indicated in the first message so as to drive the mechanical arm to place the battery module onto the conveyor line.

In an embodiment of this application, the battery module processing method may further include acquiring a first input for indicating a resting or buffering time of the battery module in the resting warehouse, and setting the resting or buffering time of the battery module in the resting warehouse based on the first input.

In an embodiment of this application, the battery module processing method may further include determining a remaining resting time of the battery module based on the set resting time and a storage time of the battery module in the resting warehouse, or determining a remaining buffering time of the battery module based on the set buffering time and a storage time of the battery module in the resting warehouse.

In an embodiment of this application, the battery module processing method may further include generating an instruction for displaying a first interface based on the determined remaining resting time or the determined remaining buffering time of the battery module, where the first interface includes multiple regions, and the multiple regions respectively correspond to multiple positions in the resting warehouse, for displaying the remaining resting time or remaining buffering time of the battery modules in these positions.

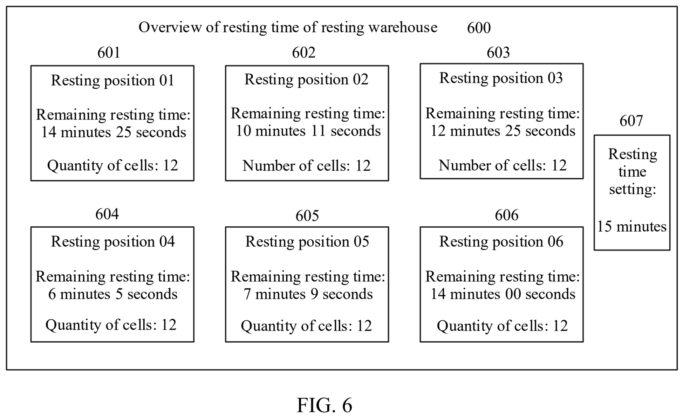

FIG. 6 is a schematic diagram of a display interface of a battery module processing system according to an embodiment of this application. FIG. 6 shows an overview 600 of a resting time of a resting warehouse. For exemplary and non-limiting purposes, FIG. 6 shows a status diagram of six resting positions, and as indicated by labels 601 to 606, each resting position is shown in a box. For exemplary and non-limiting purposes, a remaining resting time and a quantity of cells in a placed battery module are shown in each box. As shown on the right side 607 of FIG. 6, a resting time or buffering time for each resting position may be inputted through this interface.

An embodiment of this application provides a computer device, including a memory and a processor. The memory stores a computer program executable on the processor, and the processor, when executing the program, implements the steps of the battery module processing method provided in the above embodiments.

An embodiment of this application provides a readable storage medium, where a computer program is stored therein. When the computer program is executed by a processor, the steps of the battery module processing method described above are implemented.

An embodiment of this application provides a computer program product or computer program, where the computer program product or computer program includes a computer instruction, and the computer instruction is stored in a computer-readable storage medium. A processor of an electronic device reads the computer instruction from the computer-readable storage medium, and the processor executes the computer instruction, causing the electronic device to implement the battery module processing method described in the embodiments of this application.

It should be noted that the descriptions of the storage medium and device embodiments above are similar to the descriptions of the method embodiments above, with similar beneficial effects as the method embodiments. For technical details not disclosed in the storage medium and device embodiments of this application, reference is made to the description of the method embodiments of this application.

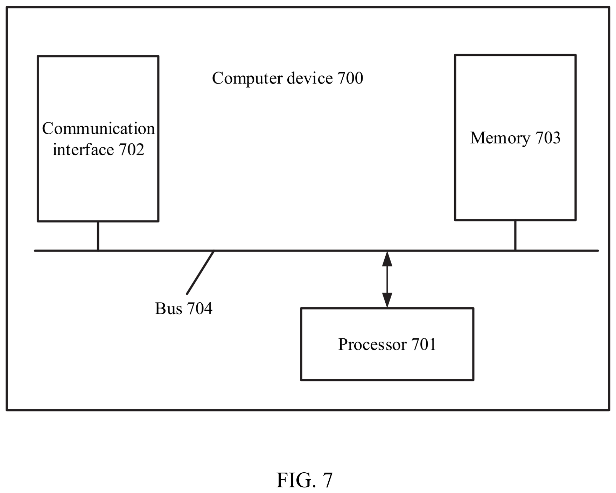

FIG. 7 is a connection diagram of a computer device according to an embodiment of this application. As shown in FIG. 7, the computer device 700 may include: a processor 701, a communication interface 702, and a memory 703, where the processor 701 typically controls the overall operation of the computer device 700. The communication interface 702 enables the computer device 700 to communicate with other electronic devices, servers, or platforms through a network.

The memory 703 is configured to store instructions and applications executable by the processor 701, and may also cache data to be processed or already processed by the processor 701 and various modules in the computer device 700 (for example, image data, audio data, voice communication data, and video communication data), which may be implemented through FLASH (flash memory) or RAM (Random Access Memory, Random Access Memory). Various hardware entities in the computer device 700 are coupled together through a bus 704. It is understood that the bus 704 is configured to enable connection communication between these hardware entities.

In several embodiments provided in this application, it should be understood that the disclosed devices and methods may be implemented in other ways. The device embodiments described above are merely illustrative; for example, the division of units is only a logical functional division, and in actual implementation, there may be other division methods. For example, multiple units or components may be combined or integrated into another system, or some features may be omitted or not implemented. Additionally, the coupling, direct coupling, or communication connection between the constituent components shown or discussed may be implemented through some interfaces, and the indirect coupling or communication connection between devices or units may be electrical, mechanical, or in other forms.

The units described as separate components may or may not be physically separate, and the components shown as units may or may not be physical units. To be specific, they may be located in one place or distributed across multiple network units; and some or all of the units may be selected according to actual needs to achieve the objectives of the solutions of this embodiment.

Furthermore, the functional units in the embodiments of this application may be integrated into one processing module, or each unit may exist independently as a unit, or two or more units may be integrated into one unit. The integrated units may be implemented in the form of hardware or in the form of hardware combined with software functional units. Those of ordinary skill in the art can understand that all or some of the steps to implement the above method embodiments can be completed through hardware related to program instructions. The aforementioned program can be stored in a computer-readable storage medium, and when the program is executed, the steps included in the above method embodiments are implemented. The aforementioned storage medium includes various media capable of storing program codes, such as mobile storage devices, ROM, RAM, magnetic disks, or optical disks.

The methods disclosed in the several method embodiments provided in this application may be arbitrarily combined without conflict to obtain new method embodiments. The steps of the method in this application may be performed in any order. The features disclosed in the several product embodiments provided in this application may be arbitrarily combined without conflict to obtain new product embodiments. The features disclosed in the several method or device embodiments provided in this application may be arbitrarily combined without conflict to obtain new method embodiments or device embodiments.

The above descriptions are only specific implementations of this application, but the protection scope of this application is not limited thereto. Any person skilled in the art can easily conceive changes or substitutions within the technical scope disclosed in this application, which should be covered within the protection scope of this application. Therefore, the protection scope of this application shall be subject to the protection scope of the claims.

Although this application has been described with reference to preferred embodiments, various improvements can be made, and components therein can be replaced with equivalents without departing from the scope of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A battery module processing method, **characterized in that** the method comprises:
in response to determining that a heated battery module exists on a conveyor line, generating an instruction for grabbing the battery module from the conveyor line;
determining a type of the battery module; and
in response to determining that the type of the battery module is a first type, generating an instruction for placing the battery module into a resting warehouse for resting, wherein the first type indicates that the battery module requires resting after heating.

2. The method according to claim 1, further comprising:
in response to determining that a battery module in a heating warehouse has completed heating, receiving a first message about the battery module, wherein the first message comprises information indicating a position in a heating warehouse from which the battery module is to be grabbed; and
based on the first message, generating an instruction for grabbing the battery module from the heating warehouse to the conveyor line.

3. The method according to claim 1, further comprising:
acquiring identification information of the battery module; and
based on the identification information, determining the type of the battery module.

4. The method according to claim 1, further comprising:
in response to determining that the type of the battery module is a second type, determining a current status of a downstream production line; and
in response to determining that the current status of the downstream production line indicates that the downstream production line is incapable of receiving the battery module, generating an instruction for placing the battery module into the resting warehouse for buffering,
wherein the second type indicates that the battery module does not require resting after heating.

5. The method according to any one of claims 1 to 4, further comprising:
receiving a second message from the resting warehouse, wherein the second message comprises information about a position in the resting warehouse capable of accommodating the battery module; and
based on the second message, generating an instruction for instructing the battery module to be placed in a position in the resting warehouse.

6. The method according to claim 4, further comprising:
in response to determining that the current status of the downstream production line indicates that the downstream production line is capable of receiving the battery module, generating an instruction for placing the battery module into the downstream production line.

7. The method according to any one of claims 1 to 4, further comprising:
acquiring a first input for indicating a resting or buffering time of the battery module in the resting warehouse; and
setting, based on the first input, the resting or buffering time of the battery module in the resting warehouse.

8. The method according to claim 7, further comprising:
determining a remaining resting time of the battery module based on the set resting time and a storage time of the battery module in the resting warehouse, or determining a remaining buffering time of the battery module based on the set buffering time and a storage time of the battery module in the resting warehouse.

9. The method according to claim 8, further comprising:
based on the determined remaining resting time or the determined remaining buffering time of the battery module, generating an instruction for displaying a first interface, wherein the first interface comprises multiple regions respectively corresponding to multiple positions in the resting warehouse, for displaying the remaining resting time or remaining buffering time of battery modules in these positions.

10. The method according to any one of claims 1 to 4, further comprising:
in response to determining that the battery module has completed resting or buffering, determining a current status of a downstream production line;
in response to determining that the current status of the downstream production line indicates that the downstream production line is capable of receiving the battery module, receiving a third message about the battery module, wherein the third message comprises information indicating a position in a resting warehouse from which the battery module is to be grabbed; and
based on the third message, generating an instruction for grabbing the battery module from the resting warehouse to the conveyor line.

11. The method according to claim 1 or 4, further comprising:
receiving first sensing data from a first sensor in a resting warehouse to determine whether a battery module is located in a resting position; and
receiving second sensing data from a second sensor in the resting warehouse to determine whether the battery module in the resting position is aligned.

12. A battery module processing system, comprising:
a heating mechanism, wherein the heating mechanism comprises a heating warehouse and a first mechanical arm;
a resting mechanism, wherein the resting mechanism comprises a resting warehouse and a second mechanical arm;
a conveyor line for transporting battery modules; and
a controller for executing the method according to any one of claims 1 to 11,
wherein the heating warehouse is configured to heat battery modules, and the first mechanical arm is configured to grab battery modules from the conveyor line to the heating warehouse or grab heated battery modules to the conveyor line based on an instruction from the controller; and
the resting warehouse is configured to rest or buffer battery modules, and the second mechanical arm is configured to grab heated battery modules from the conveyor line to the resting warehouse or grab rested or buffered battery modules to the conveyor line based on an instruction from the controller.

13. The system according to claim 11, wherein the resting warehouse comprises multiple resting racks, wherein each resting rack comprises multiple positions capable of resting or buffering battery modules.

14. The system according to claim 13, wherein each of the multiple positions capable of resting or buffering battery modules is provided with a first sensor for sensing whether a battery module is placed or a second sensor for sensing whether a battery module is aligned.

15. The system according to claim 11, further comprising a display for displaying a first interface based on an instruction generated by the controller, wherein the first interface comprises multiple regions respectively corresponding to multiple positions in the resting warehouse, for displaying a remaining resting time or a remaining buffering time of battery modules in these positions.

16. A computer device, comprising:
a memory for storing a computer-executable instruction; and
a processor connected to the memory and configured to implement the method according to any one of claims 1 to 11 by executing the computer-executable instruction.

17. A non-transient computer-readable storage medium having an instruction stored therein, wherein when the instruction is executed by a processor, the method according to any one of claims 1 to 11 is implemented.

18. A computer program product, comprising an instruction, wherein when the instruction is executed by a processor, the method according to any one of claims 1 to 11 is implemented.
